Europäisches Patentamt

European Patent Office

Office européen des brevets

(11) Publication number: **0 153 039**
**B1**

# EUROPEAN PATENT SPECIFICATION

(45) Date of publication of patent specification: **17.08.88**

(51) Int. Cl.⁴: **C 09 G 3/00**

(21) Application number: **85300574.2**

(22) Date of filing: **29.01.85**

(54) Lubricant for skis and the like.

(30) Priority: **04.02.84 JP 19092/84**
**13.07.84 JP 145376/84**

(43) Date of publication of application:
**28.08.85 Bulletin 85/35**

(45) Publication of the grant of the patent:
**17.08.88 Bulletin 88/33**

(84) Designated Contracting States:
**AT CH DE FR IT LI**

(56) References cited:
**CH-A- 255 127**

(73) Proprietor: **Dowa Mining Co., Ltd.**
**8-2, Marunouchi 1-chome**
**Chiyoda-ku Tokyo (JP)**

(72) Inventor: **Hashimoto, Shoji**
**58, Kosaka Kozan Aza Otarube Kosaka-machi**
**Kazuno-gun Akita-ken (JP)**

(74) Representative: **Ablewhite, Alan James et al**
**MARKS & CLERK 57/60 Lincoln's Inn Fields**
**London WC2A 3LS (GB)**

EP 0 153 039 B1

Courier Press, Leamington Spa, England.

## Description

### Background of the Invention

This invention relates to wax which is applied on various sliding surfaces such as running surfaces of skis for improving their sliding characteristics.

Wax of this kind, especially ski wax, is modified to adjust its physical property by selecting the paraffin in accordance with the atmospheric temperature and snow temperature at which it will be used. Since the selection of the paraffin determines to a large extent whether they win or lose a ski tournament, ski players and ski manufacturers make a frantic search for the proper wax, by measuring atmospheric and snow temperatures just before their start.

For ordinary skiers, there is available in the market wax which does not require specific adjustment of paraffin and which can be widely used on various snow conditions. However, multipurpose wax of this kind often adversely affects the sliding property of skis when it is used at a low atmospheric temperature when snow becomes powder, and also the wax has a drawback that a layer of it on the running surfaces of skis tends to come off rather easily.

### Brief Summary of the Invention

In view of the above-mentioned background, this invention is to provide a lubricant which is easy to deal with and can give excellent sliding characteristics irrespective of snow conditions. More particularly, this invention is to provide a method of lubricating sliding surfaces such as skis comprising applying thereto a lubricant comprising gallium. The lubricant is referred to herein as a wax, although metallic.

Metallic gallium having the melting point of 29.6 ± 1°C, density of 5.91 g/cc, and thermal conductivity of 0.29—0.38 (at 30°C) is soft at a low temperature, glossy, and easy to manipulate into various shapes. It has been found in this invention that gallium having the above-mentioned physical properties could advantageously be employed as such as a ski wax which can be applied on running surfaces of skis readily and evenly without hurting the surfaces; can be applied simply by warming it in warm water when it is cold; and can be applied thinly with a minimum amount. It is advantageous also that metallic gallium applied to sliding surfaces becomes harder when it abuts on snow surfaces of a low temperature, whereby it can have a longer life than paraffin wax. Experiments show that wax made in accordance with this invention has exhibited a sliding performance on various snow conditions, viz. such as fresh snow, granulated snow, damp snow, and iced-up snow, of a standard which the conventional multipurpose wax can hardly attain.

While metallic gallium alone can present the above-described good sliding performance, its melting point becomes lower so that it becomes more easier to deal with, its frictional resistance against snow surfaces becomes lower so that skis can run faster, and its production cost becomes lower when it is alloyed with a certain amount of one of more metallic elements such as In, Zn, Sn, Al and others. The preferred amount is 20—60 weight% for In, 10—20% for Zn, 10—30% for Sn, and 3—5% for Al. The balance is Ga, a composition of which with one or more of the aforementioned metallic elements, especially in the above-mentioned preferred amount, can easily be mixed and melted at a temperature lower than 100°C, as shown by phase diagrams of Ga with said metallic elements. Metallic elements other than the aforementioned metallic elements can be employed insofar as they can make alloys with Ga, and can be melted at a temperature lower than 100°C.

As mentioned above, Ga alloys come to have a melting point lower than that of Ga (that is about 30°C). For example, a binary alloy of Ga (76%) — In (24%) has a melting point of 15.7°C, and a ternary alloy of Ga (82%) — Sn (12%) — Zn (6%) has a melting point as low as 17°C, whereby they become more easier to deal with. And, it is found for this end that Ga has to be more than 60% when it constitutes a binary alloy, and more than 30% when it constitutes a ternary alloy. It is found also that the addition of Zn to Ga is effective especially when atmospheric and snow temperatures are comparatively high.

One of the most advantageous points of a ski wax of this invention comprising Ga is that it can be warmed by the hands and softened so that it can be applied readily on running surfaces of skis and then spread by a piece of gauze or sponge evenly over the surfaces. This work takes very much less time than that required with the conventional ski wax. The conventional wax is applied by means of a burner or iron, shaved portionally so as to make it smooth, and then applied again. This is quite laborious.

As mentioned above, it is an advantageous point of the wax of this invention that it can be safely used for tournaments, because it is hardly affected by snow conditions, as tested in the following Example 1.

### Detailed Description of Preferred Embodiments

This invention is further described below by way of examples.

### Example 1

Comparative sliding tests were conducted between the two kinds of conventional wax and the wax made in accordance with this invention. They are as follows.

a) Multipurpose ski wax of trade name of TOKO made in Switzerland, consisted of paraffin wax mixed with aluminum.

2

**0 153 039**

This multipurpose wax was applied on running surfaces of a pair of skis. The wax was spread evenly over the surfaces with an iron, and then wax surface was thinly shaved off. The wax was then applied and spread once again, and finished.

b) Competition wax.

b)—(1): The red and the yellow composition waxes of trade name of HOLMENKOL, made in Germany, were mixed at a ratio of 1:1 by melting them on a burner. This mixed wax was applied on the running surfaces of skis two times as in the above a), and finished.

b)—(2): The red and the white competition waxes of trade name of TOKO, made in Switzerland were mixed at a ratio of 2:1 by melting them on a burner. This mixture was applied two times as in the above a), and finished.

c) The wax of this invention.

Three kinds of wax made in accordance with this invention, viz. one comprising Ga alone, another of Ga 60% — In 40%, and further another of Ga 80% — Zn 20% were each applied on the running surfaces of a pair of skis, and they were finished by being spread evenly over the surfaces with a piece of gauze.

Two skiers who were instructors of the All Japan Ski League and representative players at the Japan National Games wore the skis and tested them ten times. The test course had an average slant of 15° and distance of 250 meters.

Average times required for the skis are given in the following Table 1.

### Table 1

(Time: seconds)

| Skis with Snow conditions | a) multipurpose wax | b) competition wax | | c) This invention wax | | |
|---|---|---|---|---|---|---|
| | | b)-(1) | b)-(2) | Ga alone | Ga-In 60:40 | Ga-Zn 80:20 |
| atmospheric temperature -5°C snow temperature -6°C (snow condition) fresh snow | 24.73 | 21.24 | 21.39 | 21.14 | 20.97 | – |
| atmospheric temperature 0°C snow temperature -1°C (snow condition) powder snow | 22.50 | 20.61 | – | 21.24 | – | 20.12 |
| atmospheric temperature snow temperature (snow condition) damp snow | 23.16 | – | – | – | – | 21.51 |

As readily seen in Table 1, wax made in accordance with this invention has better sliding capacities, compared to conventional ones. In addition, the wax of this invention can stand up well to various snow conditions including fresh, damp, granulated, and iced snow. As the wax can be spread easily at a lower temperature, one can promptly supply it to skis at skiing grounds.

**Claims**

1. A method of lubricating sliding surfaces comprising applying thereto a lubricant comprising gallium.

2. A method according to claim 1, in which the lubricant comprises gallium alloyed with one or more elements selected from In, Zn, Sn and Al.

3

3. A method according to claim 1 or claim 2, in which the content of Ga is more than 60% by weight in a binary alloy and more than 30% by weight in a ternary alloy.

4. A method according to claim 2 or claim 3, in which the gallium alloy contains one or more of said elements in the following amounts: 20—60 weight% In; 10—20 weight% Zn; 10—30 weight% Sn; 3—5 weight% Al.

5. A method according to any of claims 1 to 4, applied to skis.


**Patentansprüche**

1. Verfahren zum Schmieren von Gleitflächen, dadurch gekennzeichnet, daß auf die Gleitflächen ein Gleitmittel aufgebracht wird, das Gallium enthält.

2. Verfahren nach Anspruch 1, dadurch gekennzeichnet, daß das Gleitmittel mit einem oder mehreren der Elemente In, Zn, Sn und Al legiertes Gallium enthält.

3. Verfahren nach Anspruch 1 oder 2, dadurch gekennzeichnet, daß der Gehalt an Ga größer als 60 Gew.-% in einer Zweistofflegierung und größer als 30 Gew.-% in einer Dreistofflegierung ist.

4. Verfahren nach Anspruch 2 oder Anspruch 3, dadurch gekennzeichnet, daß die Galliumlegierung eines oder mehrere der genannten Elemente in folgender Menge enthält: 20 bis 60 Gew.-% In, 10 bis 20 Gew.-% Zn, 10 bis 30 Gew.-% Sn, 3 bis 5 Gew.-% Al.

5. Verfahren nach einem der Ansprüche 1 bis 4, gekennzeichnet durch die Anwendung auf Skier.

**Revendications**

1. Procédé de lubrification de surfaces de glissement comprenant l'application sur celles-ci d'un lubrifiant comprenant du gallium.

2. Procédé selon la revendication 1, dans lequel le lubrifiant comprend du gallium allié avec un ou plusieurs éléments choisis parmi In, Zn, Sn et Al.

3. Procédé selon la revendication 1 ou 2, dans lequel la teneur en Ga est supérieure à 60% en poids dans un alliage binaire et supérieure à 30% en poids dans un alliage ternaire.

4. Procédé selon la revendication 2 ou 3, dans lequel l'alliage de gallium contient un ou plusieurs de ces éléments dans les proportions suivantes: 20 à 60% en poids de In; 10 à 20% en poids de Zn; 10 à 30% en poids de Sn; 3 à 5% en poids d'Al.

5. Procédé selon l'une quelconque des revendications 1 à 4, appliqué à des skis.

4